Europäisches Patentamt

(19) European Patent Office

Office européen des brevets

(11) Publication number: 0 276 214 B1

## (12) EUROPEAN PATENT SPECIFICATION

(45) Date of publication of patent specification:
29.05.91 Bulletin 91/22

(51) Int. Cl.⁵: **H04N 7/10, H04N 7/04**

(21) Application number: 86905345.4

(22) Date of filing: 04.09.86

(86) International application number:
PCT/GB86/00524

(87) International publication number:
WO 87/01548 12.03.87 Gazette 87/06

(54) **TELEVISION SIGNAL TRANSMISSION METHOD AND APPARATUS.**

(30) Priority: 05.09.85 GB 8522075

(43) Date of publication of application:
03.08.88 Bulletin 88/31

(45) Publication of the grant of the patent:
29.05.91 Bulletin 91/22

(84) Designated Contracting States:
AT BE DE FR GB IT LU NL SE

(56) References cited:
GB-A- 2 145 610
Symposium Record Joint Sessions of the 14th
International TV, Broadcast and CATV, Symposium of Montreux, 6-12 June 1985, Montreux
(CH), Phillips: "Direct broadcasting satellite
transmission systems", pages 23-33

References cited:
Fernseh- und Kinotechnik, vol. 39, no. 1,
January 1985, Heidelberg (DE), D. Dinsel: "Die
Verteilung von Fernseh-Satelliten-Signalen in
Kabelnetzen", pages 11-14
IEEE Proceedings Section AAI, vol. 129, no. 7,
part A, September 1982, Old Woking, Surrey
(GB), Robson: "Extended-definition television
service", pages 485-492

(73) Proprietor: COMMUNICATIONS PATENTS
LIMITED
187 Coombe Lane West
Kingston-Upon-Thames
Surrey KT2 7DJ (GB)

(72) Inventor: QUINTON, Kenneth, Charles
'Cobbins' 20 The Barton Cobham
Surrey KT11 2NJ (GB)

(74) Representative: Allman, Peter John et al
WHEATLEY & MACKENZIE Suite 301 Sunlight
House Quay Street
Manchester M3 3JY (GB)

**Description**

The present invention relates to a television signal transmission method and apparatus.

Systems are available for broadcasting television signals via satellite to large geographical areas. Such systems, which are generally referred to as Direct-Broadcasting-Satellite (DBS) systems, can be operated using a variety of signalling techniques but to avoid incompatibility between components used on systems operated by different organisations attempts have been made to agree common transmission standards to be followed by all the system operators in a geographical region served by such systems. In Europe, the large number of national and regional broadcasting authorities have decided to use a particular form of television signal which incorporates a video component and a binary or duo-binary data component. The signal is of the type conventionally referred to as a MAC-type signal. One precise standard adopted in Europe is referred to as C-MAC which is described in the European Broadcasting Union (EBU) specification No. SPB284. The content of that specification is incorporated herein by reference.

The C-MAC broadcast standard provides a signal relying upon frequency and phase shift modulation and having a bandwidth of approximately 27 MHz. Persons wishing to receive the C-MAC signals will have to equip themselves with an off-air receiver designed for that purpose. The term "off-air receiver" is used herein to mean a receiver capable of receiving signals transmitted through the atmosphere.

The bandwidth of the C-MAC signals is too great for transmission on cable television (CATV) systems.

The term "cable" is used herein to include optical fibres in addition to electrically conductive cables. There are a number of such systems already installed and it is expected that further systems will be widely installed in the future. Accordingly, it is necessary to provide some means for enabling signals originating in C-MAC or similar form to be converted to a form of limited bandwidth suitable for transmission over cable systems. The EBU has specified standards to meet this objective as disclosed in EBU document No. SPB352. In accordance with this standard, see also Symposium Record Point Session of the 14th international TV, Broadcast and CATV-Symposium of Montreux, 6-12. June 1985, pages 23-33, the C-MAC signal is converted from frequency and phase shift modulation to amplitude modulation with vestigial side band transmission (VSB). Alternative standards referred to as D-MAC and D2-MAC have been accepted as described in document "Symposium Record Joint Session" of the 14th International TV, Broadcast and CATV-Symposium of Montreux 6-12 June 1985 pages 23-33. The form of D2-MAC intended for use on large cable systems relies upon amplitude modulation VSB transmission and duo-binary coding for the digital signal. The D2-MAC standard suits existing cable systems with a 7 or 8 MHz channel bandwidth, but at the expense of discarding half of the digital information as compared with a C-MAC signal. The D-MAC standard is suitable for CATV systems where all of the information in a C-MAC signal is to be distributed whereas the D2-MAC standard is suitable for existing systems of the type generally installed in continental Europe. It is possible that frequency modulated D-MAC or D2-MAC type signals using duo-binary coding for the digital signal will be broadcast directly via satellite rather than C-MAC type signals.

To conform with the three standards (C-MAC, D-MAC and D2-MAC) it has been agreed that all television receivers which will be produced for the European Market will incorporate a very large scale integration (VLSI) post-detection stage capable of functioning properly with each of the three types of standard input signal. However, for a receiver to operate with the D-MAC type signal it must be provided with a tuner and intermediate frequency amplifier the band-width of which is unique to the D-MAC standard. Thus, despite the provision of a VLSI stage capable of working in each of the three standards, in practice it will be necessary to provide a receiver specifically for D-MAC signal reception. The number of cable systems carrying D-MAC signals will not be very large at least for some years, and the resultant restriction on the market size for receivers of this type will inevitably make them relatively expensive.

The British Broadcasting Corporation has published details of a v.s.b. transmission system for reducing the bandwidth of signals transmitted through the atmosphere by outside broadcast units. The objective of the BBC system was to reduce the risk of interference to off-air domestic reception of standard U.H.F. broadcasts. The system is described in BBC Research Department Report 1978/20, which shows that, for a video signal of 5.5 MHz bandwidth with a frequency modulated sound sub-carrier of 6 MHz, the composite signal can, with a vision signal frequency deviation of 4 MHz peak to peak, be successfully transmitted within a bandwidth of 8 MHz. The d.c. component of the video signal was retained in the modulation process such that black level approximated to the carrier rest frequency and white level to the carrier rest frequency minus 3 MHz. The full sideband transmitted was carrier rest minus 6 MHz and a 2 MHz v.s.b. was passed. In the application of the system envisaged by the BBC the bandwidth economy did not result in more channels becoming available and accordingly the system was not implemented, as described in BBC Research Department Report No. 1979/8.

It is an object of the present invention to obviate or mitigate the problems referred to above with regard to transmitting MAC-type television signals on CATV systems.

According to the present invention there is provided a method for transmitting through a cable system television signals derived from a received frequency modulated MAC-type television signal, wherein the digital part of the received MAC-type television signal is in or is converted to duo-binary form, characterized in that the duo-binary MAC-type television signal is used to generate a frequency modulated vestigial sideband television signal which is transmitted through the cable system, the generated frequency modulated television signal having a smaller frequency deviation than the received MAC-type television signal, and the transmitted signals are applied to an off-air receiver of a type suitable for receiving frequency-modulated MAC-type signals.

Thus, in contrast to the D-MAC and D2-MAC standards where the signal in duo-binary form is amplitude modulated for transmission on cable systems, in accordance with the present invention that signal is frequency modulated. As frequency modulation is the modulation used for satellite broadcasts, conventional MAC-type off-air receivers can be used with established cable systems. Substantial capital costs in equipping subscribers to cable systems with special receivers are thereby avoided.

The present invention also provides a television signal transmission apparatus characterized by means for generating from a duo-binary MAC-type television signal a frequency modulated VSB television signal, the generated television signal having a smaller frequency deviation than the MAC-type television signal, and means for applying the generated television signal to a cable system equipped with off-air receivers of a type suitable for receiving frequency-modulated MAC-type signals.

Although the frequency deviation of the signal received from the cable system is typically less than half that of the off-air signal this is of little consequence as the video gain of the receiver can be adjusted to compensate. The signal to noise ratio degradation resulting from reduced deviation is more than compensated for by the much higher signal level provided by a CATV system as compared with an off-air reception system.

An embodiment of the present invention will now be described, by way of example, with reference to the accompanying drawings, in which :

Fig. 1 is an illustration of an arrangement for converting a binary C-MAC signal to a duo-binary signal of the D-MAC form ;

Fig. 2 is a schematic illustration of an apparatus for installation at the head end of a cable system incorporating the present invention ;

Fig 3. schematically illustrates the requirements of a domestic receiver for incorporation in a system according to the present invention ; and

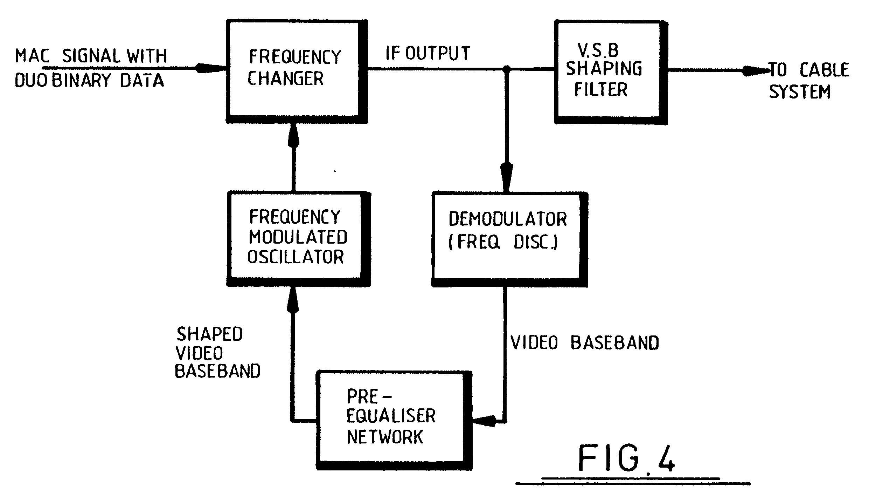

Fig. 4 schematically illustrates an alternative embodiment of the present invention.

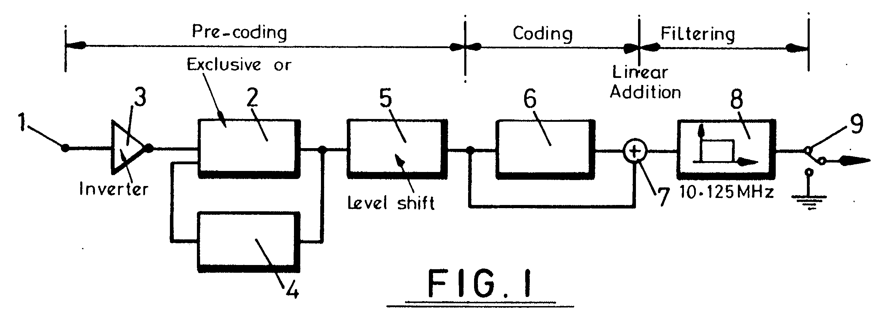

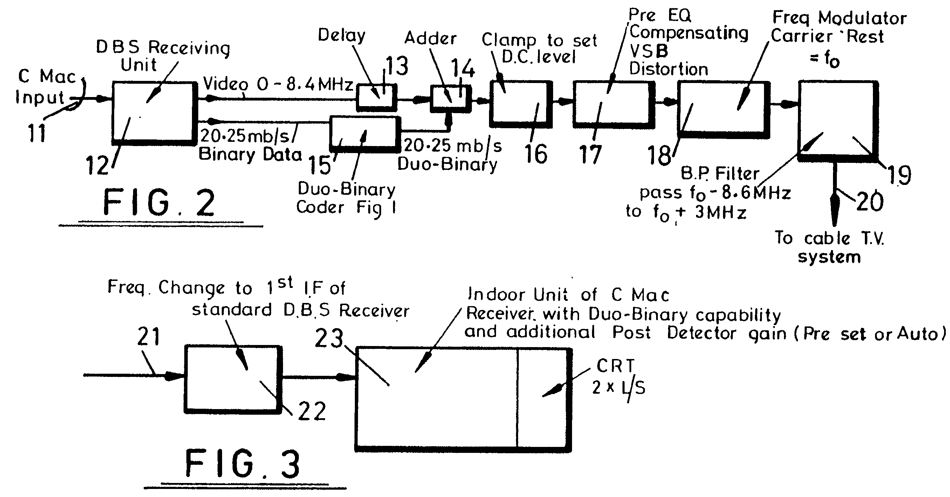

Fig 1. is based on a figure appearing in the EBU document SPB352 and illustrates components required to convert the binary portion of a C-MAC input signal applied to input 1 from binary to duo-binary form. The binary data is applied to an exclusive OR gate 2 through an inverter 3, the output of the gate 2 being applied as a further input to the gate 2 through a delay line 4. The delay line 4 introduces a delay equal to the bit interval which in the case of C-MAC signals is 49.4 ns. The output of the gate 2 is applied through a level shift network 5 to the input of a delay line 6 which also introduces a delay corresponding to the bit interval. The input and output of the delay line 6 are summed in a linear addition circuit 7 and delivered via a filter 8 to an output 9.

Referring now to Fig. 2, this illustrates the head end equipment of a CATV system embodying the present invention. A satellite broadcast conventional C-MAC input detected by dish antenna 11 is applied to a conventional DBS receiving unit 12. The video component of the C-MAC input at 0-8.4 MHz is applied through a delay line 13 to an adder 14. The 20.25 mb/s binary data of the C-MAC signal is also applied to the adder 14 through a duo-binary coder 15 of the type illustrated in Fig. 1. The output of the adder 14 is passed via a d.c. level setting clamp 16 and a pre-equalisation compensating vestigial sideband distortion network 17 to a frequency modulator 18 the rest frequency of which is fo. The modulator output is applied via a filter 19 to the CATV system which is connected to output 20. The filter 19 is a bandpass filter with the pass band extending from fo-8. 6 MHZ to fo + 3MHz.

Referring now to Fig. 3, a subscriber to the CATV system will be equipped with a receiver of the type intended for off-air reception of C-MAC signals. The input from the CATV system is applied to input 21 of a frequency changer 22 which converts the input frequency to the first intermediate frequency of the standard receiver. The output of the frequency changer 22 is applied to a standard MAC receiver 23 provided with duo-binary capability. The only modification to the standard C-MAC receiver required is additional post-detector gain which may be pre-set or switched in automatically. This extra baseband gain compensates for the reduced deviation of the signal applied to the receiver as compared with the deviation of standard C-MAC signals.

As an alternative to the arrangement of Fig. 3 a cable-only receiver could be designed for VHF or UHF direct cable connection.

It is also desirable that the receiver 23 has presettable increased selectivity as compared with a standard receiver to permit cable channels to be closely spaced in frequency.

In Fig. 2, the component 17 provides pre-equalisation compensating for VSB distortion. it may be that such compensation at the CATV head end is disadvantageous and if so it would be advantageous to provide compensation for VSB distortion in the receiver 23.

The modifications to the receiver equipment are relatively minor and would not result in major expense.

The above description assumes that the signal broadcast from the satellite is of C-MAC form. It is possible however to broadcast frequency modulated signals of MAC-type in which the digital data is already in duo-binary form. In this case conversion of the data to duo-binary form is obviously not necessary. When a conversion from binary to duo-binary form is required the received signal is demodulated to base band as described above to enable processing of the digital signal. If the digital signal in the satellite transmission is already in duo-binary form however demodulation and subsequent remodulation is not necessary. In such circumstances the frequency deviation can be reduced without going through a demodulation/remodulation process. For example the local oscillator of a frequency changer may be modulated by the demodulated received signal to produce an intermediate frequency (IF) signal with a deviation less than that of the received signal. The demodulated signal applied to modulate the local oscillator can be shaped to compensate for VSB distortion by a pre-equalising network of the kind shown at 17 in Fig. 2. The IF signal can then be passed through a band pass filter having a VSB shaping function about the IF band similar to that exhibited by the filter 19 in Fig. 2. It is of course necessary to ensure that the frequency change effected is appropriate to the particular system.

The present invention has been described with reference to problems associated with the adoption of D-MAC or D2-MAC signal formats, but it will be appreciated that other MAC-type signal formats have been proposed, e.g. B-MAC which might be adopted in Australia, and E-MAC which features more digital signals in the field blanking rather than the line blanking periods. The present invention is applicable to any received MAC-type signal comprising baseband components of video of for example 0 to 8.4 MHz and binary or duo-binary data.

## Claims

1. A method for transmitting through a cable system television signals derived from a received frequency modulated MAC-type television signal, wherein the digital part of the received MAC-type television is in or converted to duo-binary form ; characterized in that the duo-binary MAC-type television signal is used to generate a frequency modulated vestigial sideband television signal which is transmitted through the cable system, the generated frequency modulated television signal having a smaller frequency deviation than the received MAC-type television signal, and the transmitted signals are applied to an off-air receiver of a type suitable for receiving frequency-modulated MAC-type signals.

2. A television signal transmission apparatus characterized by means for generating from a duo-binary MAC-type television a frequency modulated VSB television signal, the generated television signal having a smaller frequency deviation than the MAC-type television signal, and means for applying the generated television signal to a cable system equipped with off-air receivers of a type suitable for receiving frequency-modulated MAC-type signals.

3. A signal transmission apparatus according to claim 2, comprising means for converting a MAC-type signal including digital data in binary form into a MAC-type signal in which the digital data is in duo-binary form.

## Ansprüche

1. Verfahren zur Übertragung von Fernsehsignalen, welche von einem frequenzmodulierten Fernsehempfangssignal vom MAC-Typ stammen, über ein Kabelsystem, wobei der Digitalanteil des Fernsehempfangssignals vom MAC-Typ in duobinärer Form, oder in diese Form umgewandelt, auftritt ; dadurch gekennzeichnet, daß das duobinäre Fernsehsignal vom MAC-Typ zur Erzeugung eines frequenzmodulierten Restseitenband-Fernsehsignals verwendet wird, welches über das Kabelsystem übertragen wird, wobei das erzeugte frequenzmodulierte Fernsehsignal eine kleinere Frequenzabweichung als das Fernsehempfangssignal vom MAC-Typ aufweist, und die übertragenen Signale an einen Direkt-Empfänger weitergegeben werden, der für den Empfang frequenzmodulierter Signale vom MAC-Typ geeignet ist.

2. Vorrichtung zur Übertragung von Fernsehsignalen, gekennzeichnet durch eine Einrichtung zur Erzeugung eines frequenzmodulierten RB-Fernsehsignals von einem duobinären Fernsehsignal vom MAC-Typ, wobei das erzeugte Fernsehsignal eine niedrigere Frequenzabweichung als das Fernsehsignal vom MAC-Typ aufweist, und eine Einrichtung zur Weitergabe des erzeugten Fernsehsignals an ein mit Direkt-Empfängern, die zum Empfang frequenzmodulierter Signale vom MAC-Typ geeignet sind, ausgestattetes Kabelsystem.

3. Vorrichtung zur Signalübertragung nach Anspruch 2, umfassend eine Einrichtung zur Umwandlung eines digitale Daten in binärer Form umfassenden Signals vom MAC-Typ in ein digitale Daten in duobinärer Form umfassendes Signal vom MAC-Typ.

## Revendications

1. Procédé pour la transmission de signaux de télévision à travers un système à câble, dérivés d'un signal de télévision reçu de type à composant analogique multiplex (MAC) à modulation de fréquence, dans lequel la partie numérique du signal de télévision reçu de type MAC est sous forme duobinaire ou convertie en forme duobinaire ; caractérisé en ce que le signal de télévision de type MAC duobinaire est utilisé pour générer un signal de télévision à bande latérale résiduelle à modulation de fréquence, qui est transmis à travers le système à câble, le signal de télévision à modulation de fréquence généré ayant une déviation de fréquence inférieure à celle du signal de télévision reçu de type MAC, et les signaux transmis sont passés à un récepteur aérien d'un type approprié pour recevoir des signaux de type MAC à modulation de fréquence.

2. Appareil de transmission de signaux de télévision, caractérisé par des moyens pour générer à partir d'un signal de télévision de type MAC duobinaire un signal de télévision à bande latérale résiduelle à modulation de fréquence, le signal de télévision généré ayant une déviation de fréquence inférieure à celle du signal de télévision du type MAC, et des moyens pour passer le signal de télévision généré à un système à câble équipé de récepteurs aériens d'un type adapté pour recevoir des signaux du type MAC à modulation de fréquence.

3. Appareil de transmission de signaux selon la revendication 2, comprenant des moyens pour convertir un signal de type MAC comprenant des données numériques sous forme binaire en signal de type MAC dans lequel les données numériques sont sous forme duobinaire.

FIG. 1

EP 0 276 214 B1

## FIG. 2

C Mac Input

DBS Receiving Unit

Video 0 - 8.4 MHz

Delay

Adder

Clamp to set D.C. level

Pre EQ Compensating VSB Distortion

Freq Modulator Carrier 'Rest = $f_o$

11

12

20.25 mb/s Binary Data

Duo-Binary Coder Fig 1

15

20.25 mb/s Duo-Binary

16

17

18

B.P. Filter pass $f_o$ - 8.6 MHz to $f_o$ + 3 MHz

19

20

To cable T.V. system

13

14

## FIG. 3

Freq. Change to 1st I.F of standard D.B.S Receiver

Indoor Unit of C Mac Receiver with Duo-Binary capability and additional Post Detector gain (Pre set or Auto)

21

22

23

CRT 2 x L/S

EP 0 276 214 B1

MAC SIGNAL WITH DUO BINARY DATA → **FREQUENCY CHANGER**

IF OUTPUT → **V.S.B SHAPING FILTER** → TO CABLE SYSTEM

**FREQUENCY MODULATED OSCILLATOR**

**DEMODULATOR (FREQ. DISC.)**

SHAPED VIDEO BASEBAND

VIDEO BASEBAND

**PRE-EQUALISER NETWORK**

## FIG. 4